# FASCICULE DE BREVET EUROPEEN

(11) **EP 0 484 237 B1**
(45) Date de publication et mention de la délivrance du brevet: **14.09.1994**
(21) Numéro de dépôt: 91402907.9
(22) Date de dépôt: 30.10.1991
(51) Int. Cl.: G01M 11/00, G01N 21/89

(54) **Procédé et dispositif de mesure de la qualité optique d'un vitrage**
Verfahren und Vorrichtung zur Messung der Qualität einer Glasscheibe
Process and apparatus for measuring the optical quality of a glass sheet

(30) Priorité: 31.10.1990 FR 9013517
(43) Date de publication de la demande: 06.05.1992
(73) Titulaire: SAINT-GOBAIN VITRAGE INTERNATIONAL, 92400 Courbevoie (FR)
(72) Inventeur: Cirillo, Francesco, I-00152 Rome (IT); Lecourt, Jean, F-75016 Paris (FR)
(74) Mandataire: Muller, René

(56) Documents cités:
- FR-A- 2 556 097
- US-A- 4 249 823
- US-A- 4 299 482

## Description

L'invention concerne les techniques de mesure des défauts optiques des vitrages et particulièrement des vitrages automobiles.

D'une manière générale, l'industrie cherche de plus en plus à maîtriser la qualité des produits qu'elle fabrique. Cela est vrai en particulier de la qualité optique des vitrages. Pour atteindre ce but, on maintient dans des fourchettes très étroites tous les paramètres de la production. Mais, néanmoins, un incident est toujours possible et, même s'il est détecté, son effet sur la qualité n'est pas toujours connu de telle sorte qu'un contrôle de la qualité sur 100 % de la production reste indispensable dans de nombreux cas. En ce qui concerne les vitrages, on a souvent besoin d'en évaluer la qualité optique en permanence. On peut, en particulier, souhaiter sélectionner le vitrage sortant des lignes de production pour le destiner à un usage particulier comme, par exemple, un miroir destiné à des applications scientifiques ou un verre plat mince destiné à être transformé en un pare-brise très incliné. D'une manière générale d'ailleurs, les pare-brise des automobiles modernes sont particulièrement suivis sur le plan de leur qualité optique. Ce critère touche en effet le problème de la sécurité de la conduite des automobiles et, par ailleurs, les formes des pare-brise, leur inclinaison, les matières dont ils sont fabriqués - verres très minces ou mêmes polymères transparents - nécessitent un contrôle très soigné de la qualité optique, contrôle qu'il faut souvent exercer à 100 %.

Ce contrôle est nécessaire pour avoir la certitude que le pare-brise qu'on vient de fabriquer est bien conforme aux normes existantes. Celles-ci sont soit des normes officielles valables quel que soit le type de pare-brise comme, par exemple, la norme internationale ECE-R43 qui mesure la déformation de l'image d'une multitude de cercles, soit des prescriptions spécifiques d'un constructeur automobile donné. L'un d'eux exige, par exemple, qu'une mire projetée sur un écran au travers du pare-brise (dont le plan de symétrie coïncide avec l'axe optique) ne montre en aucun point de bandes de largeur inférieure à 8 mm, alors qu'en l'absence de défaut, l'écran montre des bandes noires et blanches parallèles d'une largeur de 12 mm. En plus on exige que, sur une longueur de bande de 300 mm, la variation de largeur n'excède pas 4 mm. La mesure est à faire deux fois, une première avec les bandes horizontales et une deuxième avec les bandes verticales. Un autre constructeur utilise le même dispositif et la même mire mais avec un pare-brise dont le plan de symétrie a tourné de 55° par rapport à l'axe optique avec les bandes de la diapositive qu'on a fait tourner jusqu'à l'obtention de l'effet maximum. La variation de la largeur absolue des bandes tolérée sur l'écran n'est que de ± 3 mm, tandis qu'on exige que dans aucun carré de 5 cm de côté, la ligne projetée ne varie de plus de 4 mm.

Les trois méthodes de contrôle précédentes permettent d'évaluer la puissance optique ou sa variation. D'une manière générale, les trois grandeurs physiques qu'on cherche à mesurer sur un vitrage sont la déviation angulaire, l'angle des images multiples et la puissance optique. La première grandeur est la conséquence du fait qu'un faisceau lumineux traversant le vitrage, peut subir un changement de direction qui fait "voir" les objets observés à une autre place que celle qu'ils occupent réellement. L'apparition des images multiples s'observe dans les cas de fort contraste entre un objet lumineux et son environnement et consiste en l'apparition d'une image fantôme au voisinage de l'image principale. Quant à la troisième grandeur, dont la mesure est l'objet de l'invention, la puissance optique, on l'appelle aussi distorsion car elle déforme les images observées, elle s'exprime mathématiquement par la dérivée de la déviation angulaire par rapport à l'espace et sa mesure consiste, soit à étudier la variation de déviation d'un faisceau ponctuel qui explore le vitrage, soit à observer la déformation de l'image d'un objet défini et connu situé d'un côté du vitrage et qu'on observe au travers de ce même vitrage à partir d'un point situé de l'autre côté.

Les méthodes de contrôle existantes utilisent concrètement des procédés qui relèvent d'un principe ou de l'autre, mais ce sont toujours des techniques de projection, soit avec un faisceau localisé comme par exemple celui d'un laser, soit en projetant une mire au travers d'une zone plus ou moins importante du pare-brise. La technique du faisceau localisé, comme celle des brevets US 4 398 822 ou US 4 453 827 qui concernent des pare-brise d'avion, permet une mesure précise, en particulier de la déviation angulaire subie par les rayons lumineux à la traversée de l'endroit concerné par le faisceau étroit, mais elle nécessite des temps de mesure très longs si l'on souhaite avoir une évaluation globale des pare-brise. Et c'est justement le cas lorsqu'on veut être certain qu'une valeur limite de défaut n'est atteinte par aucun des pare-brise automobiles acceptés au contrôle de sortie d'une ligne de production.

Les autres méthodes connues sont des méthodes globales. Celle du brevet US 4 299 482 qui effectue une transformation de Fourier de l'image d'un écran strié telle qu'elle est vue au travers du pare-brise nécessite de réaliser un cliché photographique et elle est, de ce fait, inadaptée à un contrôle continu en production. La méthode décrite dans la demande de brevet DE 36 00 199 utilise, elle, le moiré existant entre un écran strié et la projection au travers du pare-brise d'une mire identique qu'on fait tourner légèrement par rapport à l'écran de manière à obtenir, en l'absence de défauts, des franges de moiré rectilignes. La déformation des franges est observée à l'oeil et la mesure de la déformation la plus importante renseigne sur le défaut optique le plus grand du champ concerné. Mais il s'agit là d'une méthode visuelle qu'il serait très difficile d'automatiser.

D'autres méthodes proposent d'éclairer un objet transparent avec une source de lumière sensiblement ponctuelle et d'observer sur un écran l'image projetée ; cette technique, connue sous le nom d'"ombroscopie", permet de repérer les défauts de puissance optique de l'objet, en particulier d'un vitrage. En effet, là où se trouve une lentille convergente, les rayons lumineux sont rassemblés et éclairent plus fortement la zone de l'écran concernée tandis, qu'au contraire, la zone touchée s'obscurcit dans le cas d'une lentille divergente. Dans ce type de méthode, l'appréciation visuelle ne peut être que qualitative car l'oeil est incapable d'évaluer quantitativement les différences de luminosité. Ainsi, lorsque ces méthodes sont utilisées dans les unités de production de pare-brise, ce ne peut être que pour effectuer un contrôle qualitatif en cours de production ou en bout de chaîne.

Une méthode de mesure, fondée sur le même principe, a été proposée. La demande de brevet EP 0 342 127 permet d'évaluer l'image ombroscopique d'un ruban de verre obtenue par réflexion lorsqu'on éclaire sous incidence rasante. Mais son procédé d'évaluation, qui utilise une mesure d'éclairement, est très sensible à l'éclairage ambiant. Il nécessite une propreté impeccable du vitrage testé et il pose des problèmes lors de l'utilisation de verres colorés.

Le dernier type de méthodes de mesure et de contrôle automatiques de la qualité optique des vitrages utilisent la projection de mires au travers du vitrage sur un écran. Ainsi le brevet FR 2 556 097 propose d'automatiser une méthode visuelle traditionnelle. On observe au travers du pare-brise, à l'aide d'une caméra spéciale, des rayures rectilignes régulières portées par un écran. Le balayage, qui est effectué avec une vitesse déterminée, permet de "mesurer" la largeur des raies sombres ou claires dans la direction du balayage et d'en déduire une information sur le défaut correspondant.

Dans le brevet FR 2 556 097, on procède précisément de la manière suivante : un écran constitué de bandes parallèles alternativement claires et sombres inclinées à 45° est situé verticalement à une certaine distance du pare-brise à tester. De l'autre côté du pare-brise, est placée une caméra CCD qui vise l'écran à son travers. Caméra et écran sont fixes, mais le pare-brise se déplace horizontalement, perpendiculairement à l'axe optique de la caméra. Celle-ci enregistre l'image d'une ligne verticale de l'écran - vue au travers du pare-brise - que lui fournit son objectif. La même ligne sera observée l'instant d'après au travers d'une section du pare-brise parallèle à la première et qui en est distante de 10 mm. Cette méthode ne permet donc une mesure que dans la direction du balayage de la caméra (qu'il est cependant possible de faire tourner de manière à effectuer la mesure dans une direction définie, autre que la verticale). Si le défaut de puissance optique n'a pas une symétrie de révolution (astigmatisme) ou si un défaut cylindrique agit dans une direction différente de la direction du balayage, le défaut mesuré n'est pas le défaut réel mais seulement sa composante dans la direction concernée. Par ailleurs, le défaut optique mesuré est moyenné sur une largeur de 10 mm. Le pouvoir de résolution de la méthode est faible et bien inférieur à celui exigé par les réglementations officielles ou les préconisations des clients. Pour ces deux raisons, mesure unidirectionnelle et résolution insuffisante, la méthode du brevet FR 2 556 097 ne peut constituer une méthode de contrôle à 100 % d'une production de pare-brise.

L'invention se propose de fournir une mesure automatique de la puissance optique dans l'ensemble d'un vitrage, particulièrement d'un pare-brise, de mesurer la valeur du défaut optique réel quelle que soit sa direction et de comparer la valeur mesurée à des limites de tolérance préétablies. Par ailleurs, la méthode de l'invention doit permettre une évaluation du pare-brise selon les critères des normes et prescriptions habituelles dans l'industrie automobile.

L'invention propose une méthode de mesure de la distorsion d'un vitrage dans laquelle on réalise l'analyse de l'image d'une mire constituée de bandes rectilignes parallèles, alternativement claires et sombres, à l'aide d'un détecteur de lumière à balayage et où ne sont mémorisées que les transitions clair-sombre et sombre-clair dans la direction de balayage. Le signal analogique, issu du détecteur, est numérisé en "un" s'il est supérieur au signal moyen et en "zéro" s'il est inférieur. La mire comporte deux réseaux de bandes inclinés l'un par rapport à l'autre, la direction de balayage faisant un angle différent de zéro avec la direction de chacun des deux réseaux. Par ailleurs, la mire comporte des domaines polygonaux unitaires clairs isolés dans un domaine unique sombre ou, au contraire, des domaines polygonaux unitaires sombres isolés dans un domaine unique clair.

Dans une variante de l'invention, les domaines isolés sont des carrés.

La méthode de l'invention prévoit également que ce soient les intersections des transitions clair-sombre, c'est-à-dire les sommets des polygones isolés, dont les positions sont comparées à leurs positions théoriques.

Dans le cas des domaines isolés carrés, ce sont les longueurs de leurs diagonales qui sont comparées aux mêmes longueurs en l'absence de défauts.

La méthode prévoit également que les sommets de tous les carrés isolés soient associés quatre par quatre pour constituer un réseau continu à mailles carrées dont on compare la longueur des diagonales aux mêmes longueurs en l'absence de défauts.

L'invention porte également sur un dispositif pour mettre en oeuvre la méthode de mesure de la distorsion et dans lequel le balayage de l'image est assuré par une caméra linéaire munie d'un diaphragme et associée à un miroir tournant. Dans le dispositif, la mire est portée par un écran qui est observé par le détecteur de lumière à balayage au travers du vitrage. Par ailleurs, dans une variante, les parties claires de l'écran sont transparentes et éclairées par l'arrière. Avantageusement, ce sont des lentilles de Fresnel qui sont placées contre l'écran et qui sont elles-mêmes éclairées par des sources ponctuelles dont la position est conjuguée de celle de l'ouverture du diaphragme de la caméra par rapport à la lentille concernée.

Selon une autre variante, les parties claires de l'écran sont équipées d'éléments catadioptriques et éclairées par une source ponctuelle située au voisinage de l'ouverture du diaphragme de la caméra.

Enfin, pour adapter la direction de mesure aux spécifications requises, on peut orienter la mire.

L'invention concerne également l'application de la méthode à la mesure des pare-brise automobiles.

La méthode de l'invention rend ainsi possible un contrôle industriel sur ligne de toute la production d'une unité moderne de fabrication de pare-brise automobiles. Elle permet, soit d'évaluer le défaut maximum quelle que soit sa direction, soit de mesurer la distorsion dans une direction privilégiée pour se conformer à une norme particulière ou à la prescription d'un client aux exigences spécifiques. Les mesures peuvent s'effectuer dans l'ambiance de l'atelier sans nécessiter un travail dans l'obscurité comme c'est le cas avec les méthodes ombroscopiques. L'état de propreté du vitrage n'est pas non plus déterminant. Le procédé de l'invention permet également une visualisation simultanée des défauts dans une zone du vitrage dont la taille est choisie - vision globale si nécessaire - ce qui en fait un outil important pour la mise au point d'une nouvelle fabrication ou pour la correction d'un incident de production.

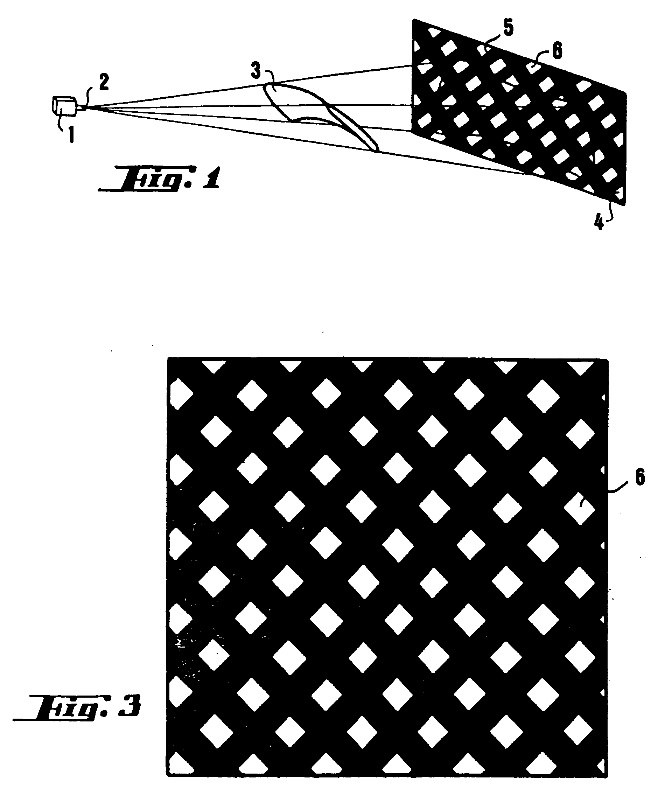

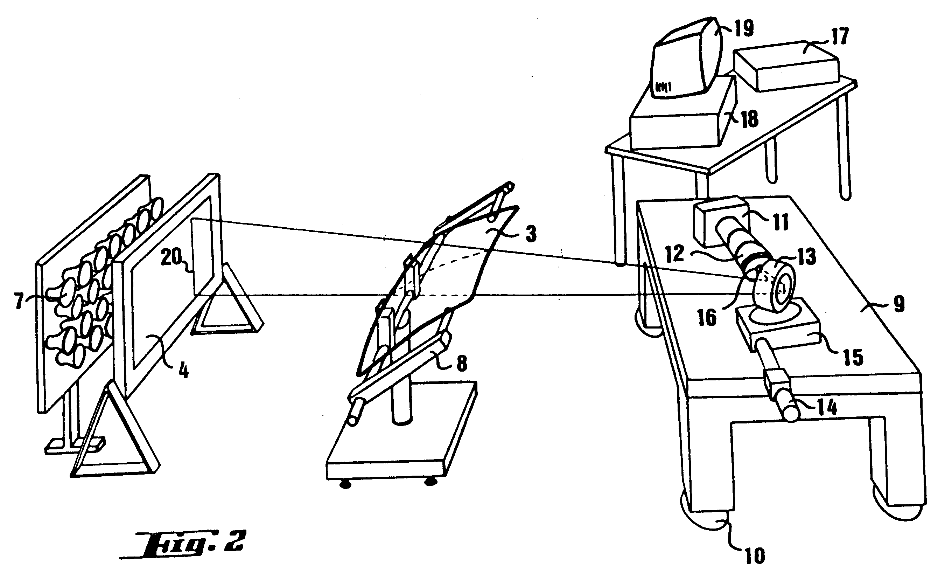

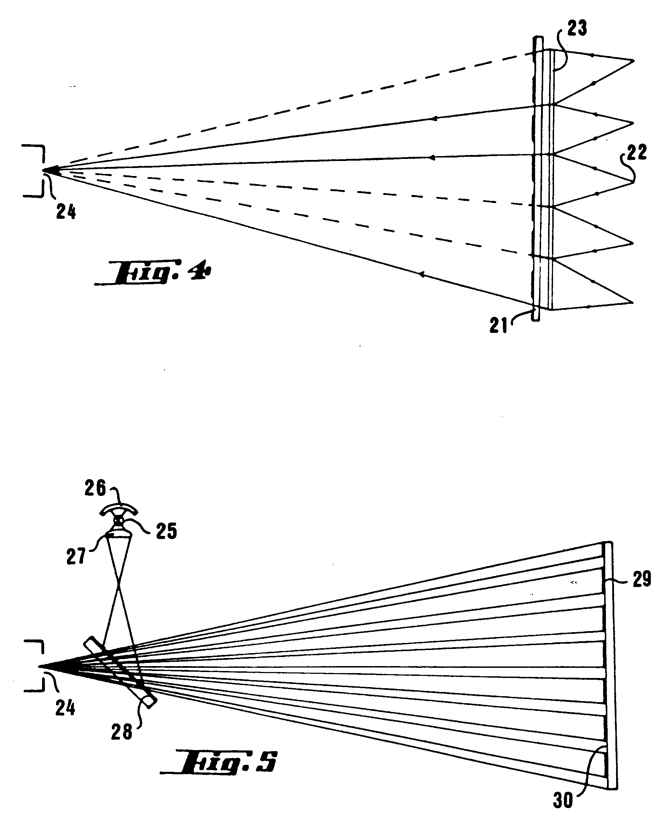

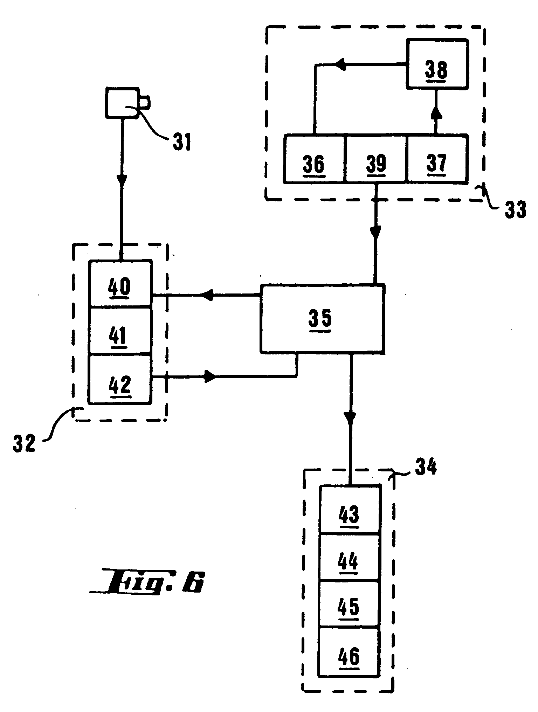

La description et les figures permettront de comprendre le fonctionnement de l'invention et d'en apprécier les avantages. Parmi les figures :
■ **la figure 1** montre l'installation qui permet la mesure,
■ **sur la figure 2,** on présente un exemple de réalisation avec une caméra à détecteur linéaire,
■ **à la figure 3,** est représenté le motif de l'écran du mode de réalisation préféré de l'invention,
■ **la figure 4** montre une variante du système d'éclairage,
■ **la figure 5** présente une autre variante de ce système,
■ **sur la figure 6,** on montre l'organigramme de la succession des opérations effectuées en électronique et en informatique.

L'installation nécessaire à l'exercice de la méthode de l'invention comporte trois éléments principaux. Ils sont schématisés figure 1. Une caméra 1 équipée de son objectif 2 permet d'observer, au travers du vitrage 3, l'écran 4. La caméra permet une évaluation de l'intensité lumineuse en tout point de son champ. En général, celui-ci est suffisamment étendu pour permettre une observation globale du vitrage. Lorsque le champ de la caméra ne le permet pas, il est nécessaire d'effectuer deux ou plusieurs mesures partielles, l'une après l'autre, ce qui impose une vitesse d'acquisition des données supérieure pour maintenir la même cadence de contrôle. L'écran 4 porte une mire constituée de bandes noires parallèles qu'il est plus simple de réaliser toutes de même largeur. La largeur des bandes blanches intermédiaires peut également avantageusement être la même. La mire comporte deux réseaux des bandes précédentes, inclinés l'un par rapport à l'autre de manière à constituer un domaine noir continu 5 emprisonnant de nombreux domaines blancs 6 tous identiques. Dans le cas le plus simple, ce sont des losanges.

Sur la figure, ce sont les domaines blancs 6 qui sont isolés. On obtiendrait le même résultat si c'étaient les domaines noirs qui étaient isolés au milieu d'un domaine unique blanc. Cependant, dans ce cas, un excès de lumière peut être préjudiciable en provoquant une saturation de la caméra et un échauffement des optiques.

Sur la figure 2, on voit un exemple de réalisation pratique de la méthode. L'écran 4 est constitué d'un verre dépoli maté au sable. Il est éclairé par l'arrière grâce à un grand nombre de lampes 7 qui éclairent, de manière sensiblement identique, tous les domaines 6. Le vitrage 3 est un pare-brise automobile supporté par un dispositif 8 qui permet de l'orienter aussi bien autour d'un axe horizontal que d'un axe vertical. La première orientation permet, par exemple, de retrouver la position du pare-brise monté dans la voiture, la seconde permet de reproduire les conditions imposées par certaines normes. La caméra 1 de la figure 1 est remplacée, ici, par le système placé sur la table 9. Celle-ci est massive et montée sur des supports 10 amortisseurs des vibrations. Le système comprend une caméra CCD 11 à détecteur linéaire vertical. Les essais ont été réalisés avec une caméra du type CA-2 fabriquée par T.A. DESIGNS LTD à MAIDEN NEWTON (DORSET, U.K.). Son détecteur comporte 3456 cellules unitaires de 7 x 7 mµ² réparties sur une barrette d'une longueur de 24,2 mm. L'objectif 12 de la caméra CCD lui permet de former sur la barrette l'image d'un segment de droite vertical d'une longueur de 460 mm dans le plan de l'écran 4. La distance globale objectif 12-écran 4 est, ici, de 4 mètres. D'une manière générale, il y a lieu de prévoir une distance objectif-vitrage qui soit la même que celle prévue dans la norme à laquelle on veut se conformer. Dans le cas de la norme ECE-R43, par exemple, elle devra être de 4 mètres. Le déplacement horizontal du faisceau lors de son balayage est obtenu par la rotation d'un miroir 13 situé juste devant l'objectif 12. Le miroir est entraîné en rotation autour d'un axe vertical grâce à un moteur à courant continu 14 et à un système d'entraînement à vis sans fin placé dans le boîtier 15. Le moteur 14 est équipé d'un compte-tours et d'un codeur incrémentiel. Sur le dispositif expérimental, l'amplitude du déplacement angulaire est telle qu'elle permet la mesure d'un demi pare-brise. De plus, un diaphragme 16 d'un diamètre de 8 mm est placé sur l'objectif 12. Ici aussi, le choix du diaphragme dépend de la norme à respecter. Le matériel électronique et informatique, situé sur une table voisine, comporte en 17 un système de contrôle de la caméra CCD et une interface pour commander le moteur 14 en fonction des indications du compte-tours et du codeur. Dans le boîtier 18 se trouvent le processeur d'un micro-ordinateur PC 80386 ainsi que le circuit reliant le circuit de commande précédent et l'interface du micro-processeur. Un écran cathodique 19 et un clavier de commande, non représenté, complètent l'ensemble.

Le contrôle optique du vitrage - en l'occurrence, du pare-brise - se déroule de la manière suivante :
Le pare-brise 3 est installé sur son support 8 dans la position (inclinaison par rapport à l'horizontale et rotation par rapport à l'axe miroir 13-centre de l'écran 4) choisie pour la mesure. Un domaine clair 6 de l'écran 4 est éclairé par la (les) lampe(s) 7 située(s) derrière lui. Grâce au verre diffusant, la lumière qui l'éclaire est rediffusée de l'autre côté. A un instant donné, c'est la zone allongée 20 de l'écran qui est analysée par la barrette portant les cellules unitaires. Ses dimensions sont 0,13 x 460 mm. En réalité, l'objectif de la caméra 11 forme une image de l'écran 4 à deux dimensions mais seule, à l'instant considéré, la zone 20 est visible pour la barrette de cellules. Lorsque les rayons lumineux, issus de la zone 20, traversent le pare-brise, ils sont déviés en fonction du défaut optique situé à cet endroit et l'image de la caméra n'est pas conforme à l'objet (la zone correspondante de la mire), elle a subi une distorsion. C'est elle qui va être mesurée.

La table qui porte le miroir 13 tourne autour d'un axe vertical situé dans son plan réflecteur. Chaque fois que le miroir a tourné de 0,002°, le codeur effectue une incrémentation d'une unité. La zone allongée 20 s'est, elle aussi, déplacée de 0,28 mm. C'est elle qui est mesurée par la barrette.

Le principe de la mesure consiste à repérer la position des quatre sommets des losanges constituant les domaines clairs 6 de la mire, à les associer quatre par quatre pour constituer un réseau continu à mailles carrées, à mesurer les distances des noeuds des mailles et à les comparer à ce qu'elles étaient au même endroit, en l'absence du vitrage. Cette évaluation est effectuée entre sommets en diagonale d'une part (2 mesures) et entre sommets voisins de l'autre (4 mesures).

La mesure d'un vitrage commence alors par l'acquisition des données : lorsque l'installation est mise sous tension, le logiciel du PC fait déplacer le miroir 13 jusqu'à ce qu'une marque spéciale, située à une extrémité de la mire, devienne visible pour le détecteur de la caméra. A cet instant, le moteur est inversé, le codeur est remis à zéro et la mesure commence. Le miroir tourne dans une nouvelle direction. Chaque fois qu'il progresse de 0,002°, le codeur s'incrémente d'une unité et lorsque la direction de rotation est inversée (c'est-à-dire lorsque le total du compteur a augmenté d'un nombre déterminé et que l'ordre d'inversion a été transmis au moteur), le total est diminué d'une unité après chaque rotation de 0,002°. L'autre fonction du codeur est, grâce aux impulsions qu'il génère, de donner l'ordre de lecture des cellules de la barrette du détecteur de la caméra CCD. On obtient alors un signal analogique dont l'amplitude est proportionnelle à l'intensité lumineuse perçue par chacune des cellules de la barrette. Chaque valeur est comparée à un niveau correspondant à un éclairement intermédiaire entre clair et sombre et devient "zéro" si elle est inférieure ou "un" si elle est supérieure. Le niveau de référence est ajusté de manière dynamique à une valeur qui correspond exactement à la moyenne arithmétique des deux signaux "blanc" et "noir" précédents. Il s'ensuit que les variations d'éclairement, aussi bien de la mire que de l'ambiance, ne perturbent pas la mesure. En numérisant le signal analogique issu des cellules, on a diminué très fortement la quantité d'informations à mémoriser.

Un autre circuit dit de "localisation des pixels" permet de limiter encore très sensiblement la quantité d'information stockée. Le système consiste à analyser la série des "zéros" et des "uns" d'une barrette, à repérer les transitions 0 -> 1 et 1 -> 0 et à relever leur abscisse ainsi que le sens de la transition. Ces informations (extrêmement réduites par rapport au signal analogique d'origine) sont stockées dans une mémoire FIFO (First In, First Out). Son contenu sera "lu" par le processeur du PC qui a déjà en mémoire la valeur du codage du miroir 13, c'est-à-dire l'ordonnée du point où la transition noir-blanc ou blanc-noir qui vient d'être enregistrée a eu lieu. Les informations stockées dans la mémoire du micro-ordinateur sont ainsi très peu nombreuses : à la fin d'un balayage complet de la mire, seules les coordonnées de chaque transition verticale, noir-blanc d'une part, blanc-noir d'autre part, sont mémorisées. Cette caractéristique de l'invention est particulièrement intéressante. En effet, dans les techniques antérieures, le nombre d'informations à mémoriser et à comparer aux valeurs de référence, en mémoire elles aussi, était tel que leur traitement utilisait un temps de machine incompatible avec les cadences de production. La seule solution compatible avec les cadences industrielles, consisterait à limiter le pouvoir de résolution du système optique pour diminuer le nombre des informations à traiter.

A la suite de leur acquisition, les données sont traitées par un logiciel développé spécialement. Ses fonctions sont les suivantes :
■ relier les transitions correspondantes de deux lignes verticales adjacentes, de manière à reconstituer les frontières des domaines blancs de la mire ;
■ pour chaque domaine blanc, déterminer les quatre sommets et les milieux des côtés ;
■ pour chaque domaine blanc, calculer la distorsion dans quatre directions, par exemple dans le cas de domaines carrés à diagonales verticales, les quatre directions sont : la verticale, l'horizontale, 45° à droite et 45° à gauche. Cette mesure se fait par comparaison de la distance séparant les points caractéristiques précédents (sommets et milieux des côtés) avec les valeurs théoriques, c'est-à-dire mesurées au même endroit en l'absence de vitrage ;
■ calculer la distorsion dans les mêmes conditions là où c'est possible sur les carrés noirs, en utilisant les mêmes points repères.

Les opérations suivantes diffèrent selon le but de l'opération - Ou bien on désire étudier la qualité du vitrage, déterminer les zones critiques de manière à agir sur les paramètres de la production comme, par exemple, sur la forme de la presse dans le cas d'un pare-brise, ou bien l'on veut seulement contrôler que le vitrage testé est bien conforme à un cahier des charges défini.

S'il s'agit d'une expertise qualitative, la suite des opérations est :
■ affichage sur l'écran 19 de l'image de la mire, éventuellement agrandissement d'une partie de cette image. Il s'agit soit de l'image, obtenue à partir du signal analogique issu de chaque cellule après qu'il ait été numérisé, soit d'une reconstitution obtenue à partir des sommets des domaines. Affichage simultané éventuel des distorsions dans chaque domaine (les grandeurs et les unités sont celles qu'on souhaite : déviation différentielle en milliradians ou bien puissance optique en dioptries ou distance focale du défaut en mètres ou toute autre grandeur imposée par une norme ;
■ mettre en valeur, grâce à des couleurs correspondant aux différents niveaux de défauts, les zones du vitrage ;
■ stocker, dans le disque dur du PC, toutes les données pour une étude statistique ultérieure ou pour une évaluation selon d'autres règles.

Dans le cas d'un contrôle du type "stop or go" de toute la production de vitrages, de pare-brise par exemple, les coordonnées de chaque domaine sont ramenées à leur position dans le pare-brise et, selon la zone concernée, les valeurs optiques mesurées dans le domaine seront traitées de manière différente. S'il s'agit de la zone périphérique du pare-brise, les mesures seront "oubliées" mais, s'il s'agit de zones centrales où des limites sont prévues par les réglementations officielles ou par les prescriptions des clients, la mesure sera comparée à la limite imposée et le vitrage accepté ou refusé selon le cas. Ici aussi, il est possible de stocker les informations dans un but d'évaluation statistique.

Sur la figure 3, on a représenté la forme de mire préférée de l'invention. Les domaines blancs 6 sont des carrés dont les diagonales sont orientées dans la direction où la mesure doit être effectuée avec la meilleure précision. Ainsi, par exemple, si la méthode normalisée à laquelle on veut se conformer utilise des bandes noires et blanches alternées horizontales, les diagonales seront verticales (et, éventuellement, les mesures dans les autres directions que la verticale ne seront pas prises en considération). Si la méthode préconisée par un constructeur automobile impose une rotation donnée du pare-brise autour d'un axe vertical puis la mesure dans une direction qui dépend de la forme du pare-brise, l'installation sera telle que les pare-brise défilent devant la caméra avec la bonne orientation, quant à la mire on la choisira avec les diagonales des domaines blancs dans la direction préconisée (qui aura été déterminée empiriquement une fois pour toute pour chaque type de pare-brise).

L'invention peut être mise en oeuvre avec des mires variées. Il a déjà été question plus haut de domaines blancs avec une forme de losanges ou même de carrés, toute forme polygonale qui permet d'isoler des domaines clairs au milieu d'un domaine unique sombre convient. (La situation symétrique, îlots polygonaux sombres dans un domaine unique clair est équivalente). Le choix de la forme polygonale des îlots répond à deux critères, d'une part, il faut pouvoir réaliser des îlots et, d'autre part, il faut qu'on puisse également exploiter les zones hors des îlots. Ainsi, sur la figure 3, quatre carrés clairs voisins (et définissant eux-mêmes ensemble un carré neuf fois plus grand que chacun d'eux) enserrent entre eux une croix noire constituée de cinq carrés sombres et tous les sommets (douze au total) de cette croix sont les mêmes que ceux des quatre carrés clairs. L'espace est ainsi entièrement quadrillé sans qu'aucune "terra incognita" ne subsiste. Le pouvoir de résolution du système est donc au moins celui qui correspond au quadrillage du réseau des sommets des carrés clairs. (En réalité il est meilleur à cause des points supplémentaires situés sur les côtés des carrés clairs qui améliorent encore le maillage). Parmi les autres formes polygonales, les triangles équilatéraux ne conviennent pas car les domaines clairs ne sont jamais isolés au milieu d'un domaine sombre unique (ou inversement). Avec les rectangles ou les carrés, la condition à respecter est que les directions de balayage fassent un angle non nul et non droit avec les côtés des domaines, le principe de la mesure nécessite, en effet, que l'on ait des transitions clair-foncé ou foncé-clair dans la direction de balayage.

Le système de mesure qui vient d'être décrit, dans le cas des domaines unitaires carrés, permet d'obtenir un très bon pouvoir de résolution. En effet, au niveau du pare-brise, chaque surface de dimensions 4 mm x 4 mm est évaluée individuellement. Pour un demi pare-brise qui a une largeur de 0,75 m et une hauteur en position d'utilisation de 0,46 m, le nombre de points de mesure est donc, par exemple, de plus de 23000. Le temps disponible pour collecter l'information sur chacune des cellules de la barrette verticale de la caméra est ainsi très court, par exemple de 2 msec si la cadence de contrôle des demi pare-brise est de un toutes les 15 secondes. Pour doubler la cadence (un pare-brise toutes les 15 secondes), ou bien on double le système optique, ou bien il y a lieu d'augmenter la cadence de traitement grâce à un micro-processeur plus puissant.

Une conséquence de ce qui précède est la nécessité de disposer d'un éclairage suffisant pour obtenir un signal électrique d'une intensité suffisante. Le dispositif de la figure 2 donne satisfaction cependant, la puissance électrique nécessaire est importante. Les figures 4 et 5 proposent des systèmes plus économes en énergie. L'écran 21 de la figure 4 est le même que celui de la figure 2 à une différence près : au lieu d'être diffusant, le verre support de la mire est ici transparent. Il est éclairé par l'arrière à l'aide de sources lumineuses ponctuelles intenses, en l'occurrence des lampes quartz-halogènes 22. Celles-ci sont placées derrière des lentilles de Fresnel 23 en un point qui est le point conjugué de l'entrée du diaphragme 24 de l'objectif de la caméra. Ce système permet à toute la lumière issue des lampes 22, qui a traversé les domaines blancs de l'écran, de se retrouver dans le plan du diaphragme 24.

Une variante du système précédent utilise une seule source ponctuelle très intense ; elle est représentée figure 5. La lampe 25 avec son réflecteur 26 et son condenseur 27 éclaire le miroir semi-réfléchissant 28 qui renvoie la lumière vers l'écran 29 qui porte la mire. Les domaines blancs 30 de celle-ci sont réalisés en un matériau catadioptrique, par exemple une peinture réflectorisée comme celle des écrans perlés. La lumière incidente est ainsi renvoyée dans sa direction d'origine et revient, pour partie, pénétrer dans le diaphragme 24.

Sur la figure 6, on a représenté l'organigramme des opérations électroniques et informatiques nécessaires à l'acquisition et au traitement des données.

On voit en 31 la caméra CCD possédant une barrette de balayage vertical. On voit également trois grands cadres qui, chacun, regroupent des fonctions logiques différentes. Le cadre 32 est destiné au pilotage de la caméra, le cadre 33 constitue le dispositif de balayage et le cadre 34 correspond au traitement des données effectué dans le micro-ordinateur. Les éléments 32, 33 et 34 sont associés les uns aux autres grâce à une carte interface 35.

L'élément 33 comprend, en 36, le moteur du miroir tournant, en 37, le compte-tours, le mouvement du miroir étant contrôlé par la carte de contrôle de vitesse 38. Entre 36 et 37 on trouve, en 39, le codeur incrémentiel.

L'élément 32 comprend quant à lui, en 40, le circuit d'acquisition d'image, alimenté directement à la sortie de la caméra 31, le circuit de transformation analogique/numérique 41 puis, en 42, le circuit de localisation des pixels et donc des transitions blanc-noir, noir-blanc.

Les fonctions assumées par le micro-processeur, schématisées en 34, sont le transfert sur mémoire RAM en 43, la comparaison avec les valeurs de références et le calcul du défaut en 44 puis la sortie alphanumérique et/ou graphique en 45 et enfin le contrôle général du process en 46.

La méthode qu'on vient de décrire consiste à observer au travers du vitrage une mire à la géométrie précise. Un Dispositif différent où c'est une diapositive précise qui est projetée au travers du vitrage sur un écran, l'écran étant observé directement par la caméra, permet la mise en oeuvre de la même méthode avec les mêmes caractéristiques et les mêmes avantages, il constitue simplement une variante du dispositif de l'invention.

Les avantages de la méthode de l'invention, en dehors de la rapidité, de la précision, de la facilité d'emploi déjà évoquées, résident également dans sa grande souplesse. Selon le logiciel équipant le micro-ordinateur (cadre 34 de la figure 6) on peut, soit faire une étude approfondie de la qualité optique d'un vitrage, par exemple lors de la mise au point des outils de bombage destinés à fabriquer le pare-brise, soit vérifier la qualité intrinsèque de chaque vitrage fabriqué - éventuellement selon les prescriptions spécifiques d'un client - et, en plus, si on le souhaite, suivre statistiquement une production de manière à éviter les dérives.

## Revendications

1. Méthode de mesure de la distorsion d'un vitrage dans laquelle on réalise l'analyse de l'image d'une mire constituée de bandes rectilignes parallèles, alternativement claires et sombres, à l'aide d'un détecteur de lumière à balayage, caractérisée en ce que ne sont mémorisées que les transitions clair-sombre et sombre-clair dans la direction de balayage et en ce que la mire comporte deux réseaux de bandes inclinés l'un par rapport à l'autre.

2. Méthode selon la revendication 1, caractérisée en ce que le signal analogique, issu du détecteur, est numérisé en "un" s'il est supérieur au signal moyen et en "zéro" s'il est inférieur.

3. Méthode selon la revendication 1 ou 2, caractérisée en ce que la direction de balayage fait un angle différent de zéro avec la direction de chacun des deux réseaux.

4. Méthode selon l'une des revendications 1 à 3, caractérisée en ce que la mire comporte des domaines polygonaux unitaires clairs isolés dans un domaine unique sombre ou, au contraire, des domaines polygonaux unitaires sombres isolés dans un domaine unique clair.

5. Méthode selon la revendication 4, caractérisée en ce que les domaines isolés sont des carrés.

6. Méthode selon l'une des revendications 1 à 5, caractérisée en ce que ce sont les intersections des transitions clair-sombre ou sombre-clair, c'est-à-dire les sommets des polygones isolés, dont les positions sont comparées à leurs positions théoriques.

7. Méthode selon les revendications 5 et 6, caractérisée en ce que ce sont les longueurs des diagonales des carrés isolés qui sont comparées aux mêmes longueurs en l'absence de défauts.

8. Méthode selon la revendication 5 et la revendication 7, caractérisée en ce que les sommets de tous les carrés isolés sont associés quatre par quatre pour constituer un réseau continu à mailles carrées dont on compare la longueur des diagonales aux mêmes longueurs en l'absence de défauts.

9. Dispositif pour mettre en oeuvre la méthode de mesure de la distorsion selon l'une des revendications précédentes, caractérisé en ce que le balayage de l'image est assuré par une caméra linéaire (11) munie d'un diaphragme (16) et associée à un miroir tournant (13).

10. Dispositif pour mettre en oeuvre la méthode de mesure de la distorsion selon l'une des revendications 1 à 8, caractérisé en ce que la mire est portée par un écran (4 ; 21) qui est observé par le détecteur de lumière à balayage au travers du vitrage (3).

11. Dispositif selon la revendication 10 dans lequel les parties claires (6) de l'écran sont transparentes et éclairées par l'arrière.

12. Dispositif selon la revendication 9 et la revendication 11, caractérisé en ce que des lentilles de Fresnel (23) sont placées contre l'écran (21) et qu'elles sont éclairées par des sources ponctuelles (22) dont la position est conjuguée de celle de l'ouverture du diaphragme (24) de la caméra par rapport à la lentille concernée.

13. Dispositif selon les revendications 9 et 10 dans lequel les parties claires (30) de l'écran (29) sont équipées d'éléments catadioptriques et éclairées par une source ponctuelle (25) située au voisinage de l'ouverture du diaphragme (24) de la caméra.

14. Dispositif selon l'une des revendications 10 à 13, caractérisé en ce qu'on oriente la mire pour adapter la direction de mesure aux spécifications requises.

15. Application de la méthode selon l'une des revendications 1 à 8 à la mesure des pare-brise automobiles.

## Claims

1. Method for measuring the distortion of a glazing in which analysis takes place of the image of a test pattern constituted by alternating light and dark, parallel, linear strips, with the aid of a scanning photodetector, characterized in that only the light-dark and dark-light transitions in the scanning direction are stored and in that the test pattern has two networks of reciprocately inclined strips.

2. Method according to claim 1, characterized in that the analog signal from the detector is digitized into "one" if it is above the average signal and into "zero" if it is below.

3. Method according to claim 1 or 2, characterized in that the scanning direction forms an angle differing from zero with the direction of each of the two networks.

4. Method according to any one of the claims 1 to 3, characterized in that the test pattern has unitary, light polygonal areas isolated in a single dark area or, conversely, unitary, dark polygonal areas isolated in a single, light area.

5. Method according to claim 4, characterized in that the isolated areas are squares.

6. Method according to any one of the claims 1 to 5, characterized in that they are intersections of light-dark or dark-light transitions, i.e. the apices of isolated polygons, whose positions are compared with their theoretical positions.

7. Method according to claims 5 and 6, characterized in that the lengths of the diagonals of the isolated squares are compared with the same lengths in the absence of faults.

8. Method according to claim 5 and claim 7, characterized in that the apices of all the isolated squares are associated in fours in order to form a continuous, square mesh network, whereof the length of the diagonals is compared with the same lengths in the absence of faults.

9. Device for performing the distortion measuring method according to any one of the preceding claims, characterized in that the scanning of the image takes place by a linear camera (11) provided with a diaphragm (16) and associated with a rotary mirror (13).

10. Device for performing the distortion measuring method according to any one of the claims 1 to 8, characterized in that the test pattern is carried by a screen (4,21), which is observed by the scanning photodetector through the glazing (3).

11. Device according to claim 10, wherein the light parts (6) of the screen are transparent and illuminated from the rear.

12. Device according to claim 9 and claim 11, characterized in that Fresnel lenses (23) are placed against the screen (21) and are illuminated by point sources (22), whose position is conjugate of that of the aperture of the diaphragm (24) of the camera with respect to the lens in question.

13. Device according to claims 9 and 10, wherein the light parts (30) of the screen (29) are equipped with catadioptric elements and illuminated by a point source (25) positioned in the vicinity of the aperture of the diaphragm (24) of the camera.

14. Device according to any one of the claims 10 to 13, characterized in that the test pattern is oriented in order to adapt the measuring direction to the requisite specifications.

15. Application of the method according to any one of the claims 1 to 8 to the measurement of car windscreens.

## Patentansprüche

1. Verfahren zur Messung der Verzerrung einer Verglasung, in welchem die Analyse der Bilder eines Visiermusters bestehend aus parallelen geradlinigen Streifen, die abwechselnd hell und dunkel sind, mit Hilfe eines Abtastlichtdetektors durchgeführt wird, **dadurch gekennzeichnet,** daß nur die Übergänge hell-dunkel und dunkel-hell in Richtung der Abtastung gespeichert werden und daß das Visiermuster zwei Raster von Streifen umfaßt, die zueinander geneigt sind.

2. Verfahren nach Anspruch 1, **dadurch gekennzeichnet,** daß das Analogsignal, das vom Detektor ausgegeben wird, mit "Eins" digitalisiert wird, wenn es über einem mittleren Signal liegt, und mit "Null", wenn es darunter liegt.

3. Verfahren nach Anspruch 1 oder 2, **dadurch gekennzeichnet,** daß die Richtung des Abtastens einen Winkel verschieden von Null mit der Richtung jedes der beiden Raster bildet.

4. Verfahren nach einem der Ansprüche 1 bis 3, **dadurch gekennzeichnet,** daß das Visiermuster polygonale Bereiche umfaßt, die einheitlich hell sind und in einem einheitlich dunklen Bereich isoliert sind oder im Gegenteil einheitlich dunkle polygonale Bereiche in einem einheitlich hellen Bereich isoliert sind.

5. Verfahren nach Anspruch 4, **dadurch gekennzeichnet,** daß die isolierten Bereiche viereckig sind.

6. Verfahren nach einem der Ansprüche 1 bis 5, **dadurch gekennzeichnet,** daß es die Schnittstellen der Übergänge hell-dunkel oder dunkel-hell, d.h. die Spitzen der isolierten Polygone sind, deren Positionen mit ihren theoretischen Positionen verglichen werden.

7. Verfahren nach Anspruch 5 und 6, **dadurch gekennzeichnet,** daß die Länge der Diagonalen der isolierten Vierecke mit denselben Längen bei Abwesenheit von Defekten verglichen werden.

8. Verfahren nach Anspruch 5 und Anspruch 7, **dadurch gekennzeichnet,** daß die Spitzen aller isolierten Vierecke vier-zu-vier verbunden werden, um ein durchgehendes Netz von viereckigen Maschen zu bilden, dessen Längen der Diagonalen mit den gleichen Längen bei Abwesenheit von Fehlern verglichen werden.

9. Vorrichtung zur Durchführung des Verfahrens zur Messung der Verzerrung gemäß einem der vorangegangenen Ansprüche, **dadurch gekennzeichnet,** daß die Abtastung des Bildes durch eine lineare Kamera (11) erfolgt, die mit einem Diaphragma (16) versehen ist und mit einem Drehspiegel (13) verbunden ist.

10. Vorrichtung zur Durchführung des Verfahrens zur Messung der Verzerrung gemäß einem der Ansprüche 1 bis 8, **dadurch gekennzeichnet,** daß das Visiermuster durch einen Schirm (4;21) getragen wird, der durch den Abtastlichtdetektor durch die Verglasung (3) beobachtet wird.

11. Vorrichtung nach Anspruch 10, in welchem die hellen Teile (6) des Schirms transparent sind und von hinten beleuchtet werden.

12. Vorrichtung nach Anspruch 9 und 11, **dadurch gekennzeichnet,** daß Fresnel-Linsen (23) an dem Schirm (21) vorgesehen sind und daß diese durch Punktquellen (22) beleuchtet werden, deren Position konjugiert zur Öffnung des Diaphragmas (24) der Kamera in bezug auf die betreffende Linse ist.

13. Vorrichtungen nach Anspruch 9 und 10, in welchen die hellen Teile (30) des Schirms (29) mit Reflektionsglaselementen versehen sind und durch eine Punktquelle (25) beleuchtet werden, die nahe der Öffnung des Diaphragmas (24) der Kamera angeordnet ist.

14. Vorrichtungen nach einem der Ansprüche 10 bis 13, **dadurch gekennzeichnet,** daß das Visiermuster zur Anpassung der Meßrichtung an die gegebenen Anforderungen orientiert wird.

15. Anwedung des Verfahrens gemäß einem der Ansprüche 1 bis 8 zur Vermessung von Autowindschutzscheiben.
